(19) Europäisches Patentamt
European Patent Office
Office européen des brevets

(11) **EP 3 511 428 A1**

(12) **EUROPEAN PATENT APPLICATION**
published in accordance with Art. 153(4) EPC

(43) Date of publication:
**17.07.2019 Bulletin 2019/29**

(51) Int Cl.:
*C21C 7/072* *(2006.01)*    *C21C 7/00* *(2006.01)*
*C22C 38/00* *(2006.01)*

(21) Application number: **17849045.4**

(22) Date of filing: **04.09.2017**

(86) International application number:
**PCT/KR2017/009664**

(87) International publication number:
**WO 2018/048161 (15.03.2018 Gazette 2018/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **06.09.2016 KR 20160114442**

(71) Applicant: **Posco**
**Pohang-si, Gyeongsangbuk-do 37859 (KR)**

(72) Inventors:
• **KANG, Soo Chang**
  **Gwangyang-si**
  **Jeollanam-do 57783 (KR)**
• **AHN, Chong Tae**
  **Gwangyang-si**
  **Jeollanam-do 57773 (KR)**
• **HAN, Woong Hee**
  **Gwangyang-si**
  **Jeollanam-do 57773 (KR)**
• **BEAK, Jun Jeong**
  **Gwangyang-si**
  **Jeollanam-do 57810 (KR)**
• **SONG, Min Ho**
  **Gwangyang-si**
  **Jeollanam-do 57773 (KR)**

(74) Representative: **Zech, Stefan Markus**
  **Meissner Bolte Patentanwälte**
  **Rechtsanwälte Partnerschaft mbB**
  **Postfach 86 06 24**
  **81633 München (DE)**

(54) **METHOD FOR MANUFACTURING STEEL**

(57)     In accordance with an exemplary embodiment, provided is a method for producing steel including: preparing a first molten steel and a manganese-containing melt; supplying a nitrogen gas into a storage to blow nitrogen into the melt received in the storage and thereby adjusting a nitrogen content (wt%) in the melt to a required nitrogen content (wt%); and mixing the melt and the first molten steel to produce a second molten steel containing manganese and nitrogen.. Thus, in the exemplary embodiments, since nitrogen is not blown while melting large amounts of solid materials, the oxidation of manganese due to a high temperature may be minimized or prevented. In addition, in the exemplary embodiments, a large amount of solid material is not added, and a small amount of manganese-containing nonferrous metal or a FeMn ferroalloy is added, if necessary, into a produced melt in a molten state, and thus, a problem of temperature drop due to the input of the solid material may be minimized or prevented.

[Fig. 1]

**Description**

TECHNICAL FIELD

The present disclosure herein relates to a method for producing steel, and more particularly, to a method for producing steel, the method allowing nitrogen to be easily added.

BACKGROUND ART

High manganese steel having a high manganese content of 5-25 wt% has excellent processability, high ultralow temperature toughness, and high strength, and is thus being widely used as a high-strength, high-formability steel material for vehicles.

However, the high manganese steel has disadvantage in that the yield strength thereof is merely about 300 MPa, and the tensile strength thereof cannot exceed 1 GPa, and it is necessary to provide a high-manganese steel having higher strength while maintaining elongation. To this end, producing of high-manganese steel having an increased nitrogen content has been attempted.

Methods for increasing the nitrogen content in order to improve the strength and elongation include a method in which while a solid-state FeMn ferroalloy, a manganese-containing nonferrous metal, and scrap iron are charged into an arc electric furnace and melted, nitrogen is added, as disclosed in Korean patent No. 1193718. In this case, large amounts of solid materials (solid-state FeMn ferroalloy, manganese-containing nonferrous metal, and scrap iron) charged into the arc electric furnace should be melted and hence be heated with high-temperature heat, and thus, there is a limitation in that manganese is oxidized due to high-temperature heat.

There is another method, as disclosed in Korean Patent No. 1450177, in which a solid-state FeMn ferroalloy, a manganese-containing nonferrous metal, and scrap iron are melted in a vacuum melting furnace, and then, while pressurizing the inside of the melting furnace up to 1.5-2.5 bar, nitrogen is added. However, in this method, there is also a limitation in that since large amounts of solid materials should be melted, the oxidation of manganese occurs due to high-temperature heat, and a long time is required to pressurize the inside of the melting furnace and thus leads to an increase in operation time.

In addition, in case of the above-mentioned arc electric furnace and the vacuum melting furnace, it is difficult to secure the temperature of molten steel due to the addition of the solid ferroalloy.

(Related art documents)

Korean Patent No. 10-1450177
Korean Patent No. 10-1193718

DISCLOSURE OF THE INVENTION

TECHNICAL PROBLEM

The present disclosure herein provides a method for producing steel, the method allowing a nitrogen content to be easily increased.

TECHNICAL SOLUTION

In accordance with an exemplary embodiment, a method for producing steel includes: preparing a first molten steel and a manganese-containing melt; supplying a nitrogen gas into a storage to blow nitrogen into the melt received in the storage and thereby adjusting a nitrogen content (wt%) in the melt to a required nitrogen content (wt%); and mixing the melt and the first molten steel to produce a second molten steel containing manganese and nitrogen.

The adjusting the nitrogen content (wt%) in the melt to the required nitrogen content (wt%) includes: calculating a required nitrogen content (T) required for the second molten steel by using a second molten steel amount (T) which is a target producing amount of the second molten steel, and a target nitrogen content (wt%) of the second molten steel to be mixed; calculating the required nitrogen content (wt%) required for the melt in order to produce the second molten steel by using the required nitrogen amount (T) required for the second molten steel and a mixing amount (T) of the melt; deriving at least one among a melt temperature, a carbon (C) content (wt%) in the melt, a chromium (Cr) content (wt%) in the melt, or an aluminum (Al) content (wt%) in the melt in order to satisfy the calculated required nitrogen content (wt%); and adjusting the melt so as to satisfy the derived melt temperature while blowing nitrogen into the melt inside the storage, and adjusting at least one of the chromium (Cr) content (wt%) in the melt or the aluminum (Al) content (wt%) in the melt so as to satisfy the derived chromium (Cr) content (wt%) in the melt and the derived aluminum (Al) content (wt%) in the melt.

In the calculating the required nitrogen amount required for the second molten steel, Equation 1 is used,

[Equation 1]

$$\text{Required nitrogen amount of second molten steel } (T)$$

$$= \text{Amount of second molten steel } (T)$$

$$\times \frac{\text{Target nitrogen content of second molten steel } (wt\%) - 0.01\ (wt\%)}{100\ (wt\%)}$$

and in calculating the nitrogen content (wt%) required for the melt, Equation 2 is used.

[Equation 2]

$$\text{Required nitrogen amount in melt } (wt\%)$$

$$= \frac{\text{Required nitrogen amount of second molten steel } (T))}{\text{Melt mixing amount } (T)} \times 100\ (wt\%)$$

The method includes calculating the mixing amount (T) of the melt by using a mixing amount (T) of the first molten steel, a target manganese content (wt%) in the second molten steel, and a manganese content (wt%) in the melt. In calculating the mixing amount (T) of the melt, Equation 3 is used.

[Equation 3]

$$\text{Melt mixing amount } (T)$$

$$= \left( \text{Amount of second molten steel } (T) \right.$$

$$\left. \times \frac{\dfrac{\text{Target manganese content of second molten steel } (wt\%)}{100}}{\dfrac{\text{Manganese content in melt } (wt\%)}{100}} \right)$$

$$- \text{Solid manganese add amount } (T)$$

In the deriving at least one among a melt temperature, a carbon (C) content (wt%) in the melt, a chromium (Cr) content (wt%) in the melt, or an aluminum (Al) content (wt%) in the melt, Equation 4 is used.

[Equation 4]

$$\text{Required nitrogen content in melt } (wt\%)$$

$$= \left(3.95 - 2.09^{10^{-3}}\right) \times \text{Melt temperature } (^{\circ}\text{C})$$

$$\times (0.15 \times \text{Carbon } (C) \text{ content } (wt\%) \text{ in melt}) + (0.093$$

$$\times (\text{Chromium } (Cr) \text{content } (wt\%) \text{ in melt})$$

$$+ (0.14 \times \text{Aluminum } (Al) \text{ content } (wt\%) \text{ in melt})$$

In the adjusting of the melt temperature and the carbon (C) content (wt%) so as to satisfy the derived temperature of the manganese-containing melt and the derived carbon (C) content (wt%), and in adjusting of the chromium (Cr) content (wt%) in the melt or the aluminum (Al) content (wt%) in the melt so as to satisfy at least one of the derived chromium (Cr) content (wt%) and the derived aluminum (Al) content (wt%), the temperature of the manganese-containing melt is adjusted to the manganese-containing melt temperature derived by raising or maintaining the melt temperature inside the storage while blowing nitrogen into the storage; and when the carbon (C) content (wt%) is derived in order to satisfy the required nitrogen content (wt%) required for the melt, in the preparing of the manganese-containing melt, the melt is adjusted so as to satisfy the derived carbon (C) content (wt%), and each content (wt%) of the chromium (Cr) content (wt%) and the aluminum (Al) content (wt%) in the melt is adjusted by inputting a chromium (Cr)-containing material and a aluminum (Al)-containing material into the storage.

When the calculated nitrogen content required for the melt is less than 1 wt%, at least one of the melt temperature and the carbon (C) content (wt%) in the melt is adjusted, and when the calculated nitrogen content required for the melt is no less than 1 wt%, at least one of the chromium (Cr) content (wt%) in the melt and the aluminum (Al) content (wt%) in the melt is adjusted.

In the mixing of the nitrogen-blown melt and the first molten steel, the melt having the nitrogen content adjusted to the required nitrogen content (wt%) in the storage is mixed with the first molten steel in the mixing amount (T) of the melt calculated by Equation 3.

The method includes: measuring the nitrogen content (wt%) of the second molten steel produced by mixing the melt and the first molten steel; comparing the measured nitrogen content (wt%) of the second molten steel with the target nitrogen content (wt%); starting casting using the second molten steel when the measured nitrogen content (wt%) of the second molten steel satisfies the target nitrogen content (wt%); and further adjusting the nitrogen content (wt%) when the measured nitrogen content (wt%) of the second molten steel does not satisfy the target nitrogen content (wt%).

The further adjusting of the nitrogen content (wt%) includes: inputting an nitrogen-containing alloy when the measured nitrogen content (wt%) of the second molten steel is lower than the target nitrogen content (wt%) is performed; and degassing of the second molten steel is performed when the measured nitrogen content (wt%) of the second molten steel is higher than the target nitrogen content (wt%).

## ADVANTAGEOUS EFFECTS

In accordance with exemplary embodiments, nitrogen is blown into a melt to adjust the nitrogen content before mixing the melt and molten steel, and the adjusted melt is mixed with the molten steel to match the nitrogen content of high-nitrogen, high-manganese steel to be produced.

Thus, in the exemplary embodiments, since nitrogen is not blown while melting large amounts of solid materials, the oxidation of manganese due to a high temperature may be minimized or prevented. In addition, in the exemplary embodiments, a large amount of solid material is not added, and a small amount of manganese-containing nonferrous metal or a FeMn ferroalloy is added, if necessary, into a produced melt in a molten state, and thus, a problem of temperature drop due to the addition of the solid material may be minimized or prevented.

## BRIEF DESCRIPTION OF THE DRAWINGS

FIG. 1 is a flowchart showing a method for producing a high-nitrogen, high-manganese steel in accordance with an exemplary embodiment.

FIG. 2 is a flowchart showing a process of producing a melt through a method in accordance with exemplary embodiments.

FIG. 3 is a graph exemplarily showing a nitrogen content required in a melt to be mixed with molten steel in order to produce a high-nitrogen, high-manganese steel so as to have the target contents of manganese and nitrogen.

## MODE FOR CARRYING OUT THE INVENTION

Hereinafter, exemplary embodiments will be described in detail with reference to the accompanying drawings. The present disclosure may, however, be embodied in different forms and should not be construed as limited to the embodiments set forth herein. Rather, these embodiments are provided so that this disclosure will be thorough and complete, and will fully convey the scope of the present disclosure to those skilled in the art. In the drawings, like reference numerals refer to like elements throughout.

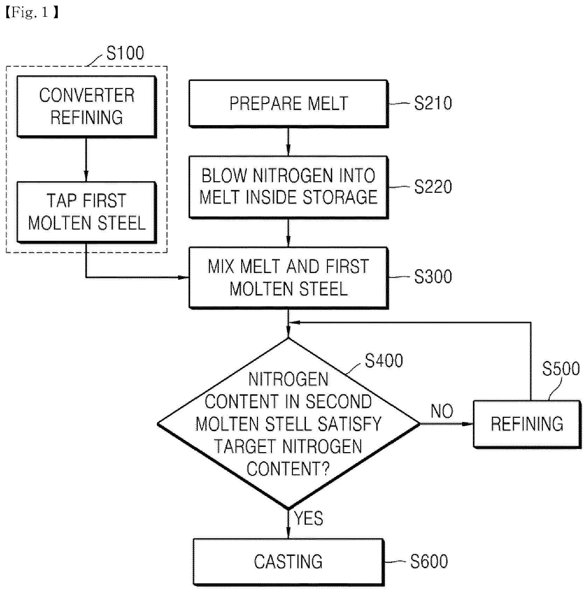

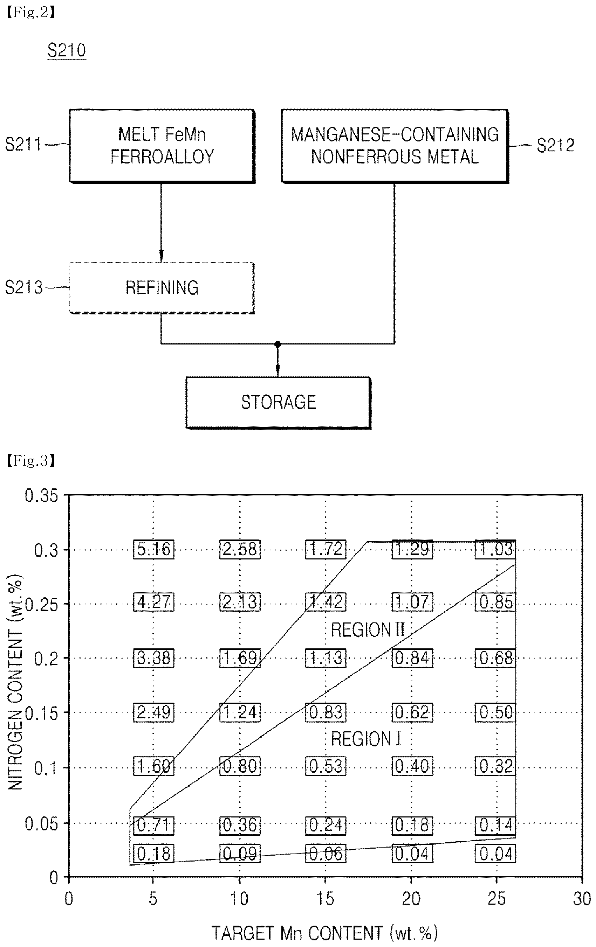

FIG. 1 is a flowchart showing a method for producing a high-nitrogen, high-manganese steel in accordance with an exemplary embodiment. FIG. 2 is a flowchart showing a process of producing a melt through a method in accordance with exemplary embodiments. FIG. 3 is a graph exemplarily showing a nitrogen content required in a melt to be mixed with molten steel in order to produce a high-nitrogen, high-manganese steel so as to have the target contents of manganese and nitrogen.

The present disclosure relates to a method for producing steel, and more particularly, to a method for producing steel which has a higher content of manganese and nitrogen, for example, 5-25 wt% of manganese (Mn) and 0.02-0.3 wt% of nitrogen (N), in order to improve the strength and elongation. Furthermore, the present disclosure provides a method for producing a high-nitrogen, high-manganese molten steel, wherein nitrogen is blown into a melt in a molten state to adjust the nitrogen content, and thus, while minimizing or preventing the limitation of quality degradation, such as oxidation of manganese or temperature drop due to high-temperature heat, as in related arts, the nitrogen content may be easily adjusted.

In an embodiment, the high-nitrogen, high-manganese steel is produced which contains, based on 100 wt% of the high-nitrogen, high-manganese steel, 5-25 wt% of manganese (Mn), 0.02-0.3 wt% of nitrogen (N), 0.04-1.5 wt% of carbon (C), and a remainder of iron (Fe) and other impurities.

Hereinafter, with reference to FIGS. 1 and 3, a method for producing steel in accordance with an exemplary embodiment will be described.

Referring to FIG. 1, a method for producing steel roughly includes: preparing molten steel (SI00); preparing a melt of which manganese content and nitrogen content (S200) were adjusted; mixing the melt and the molten steel to produce high-nitrogen, high-manganese molten steel (S300); sampling the produced high-nitrogen, high-manganese molten steel, measuring a nitrogen content, and comparing the measured nitrogen content with a target nitrogen content (S400); performing casing when the measured nitrogen content of the high-nitrogen, high-manganese molten steel meets or satisfies the target nitrogen content (S600); and performing refining for adjusting the nitrogen content when the measured nitrogen content of the high-nitrogen, high-manganese molten steel does not meet or satisfy the target nitrogen content (S500). Here, the casing may be either a continuous casting method or an ingot casting method.

The preparing of molten steel (S100) includes: charging the molten steel produced from a blast furnace into a converter and refining the molten steel (S110); and tapping the molten steel from the converter (S120). Here, the refining of the molten steel in the converter is a process for adjusting at least one component of carbon (C), phosphorous (P), or sulfur (S) in the molten steel, and is performed by blowing oxygen into the converter for blow refining of the molten steel, or inputting sub material such as a dephosphorizing agent or a desulfurizing agent.

The preparing of a melt (S200) includes preparing a manganese-containing melt (S210), and blowing nitrogen into the manganese-containing melt to prepare a nitrogen and manganese-containing melt (S220). In an embodiment, nitrogen is supplied to a storage in which the melt in a molten state is stored, and is blown into the melt.

Hereinafter for convenience of description, the manganese-containing melt before blowing nitrogen thereinto is referred to as a first melt, and the term of "manganese-containing melt" or "first melt" is interchangeably used. Furthermore, the manganese-containing melt having the adjusted nitrogen content by blowing nitrogen and a second melt are interchangeably used.

Furthermore, molten steel to be mixed with the manganese-containing melt into which nitrogen has been blown, that is, the second melt, is referred to as a first molten steel, and molten steel in which the first molten steel and the second melt are mixed is referred to as a second molten steel.

In the preparing of the manganese-containing melt, that is, the first melt (S210), as shown in FIG. 2, at least one of a FeMn ferroalloy or a manganese-containing nonferrous metal having a manganese content of 99% is melted (S211, S213) to prepare the first melt. That is, the first melt may be produced by using the FeMn ferroalloy or the manganese-containing nonferrous metal or by mixing the FeMn ferroalloy or the manganese-containing nonferrous metal.

At this point, the FeMn ferroalloy is produced by reducing manganese ore, a reducing agent, and sub materials in an electric furnace or a blast furnace, but the FeMn ferroalloy may be refined in a separate refining furnace, for example, carbon is removed therefrom (S213), or may not be refined. Accordingly, when a separate refining process is not performed on the FeMn ferroalloy, a molten FeMn with a high carbon content, that is, high-carbon FeMn ferroalloy is added to the storage, and when the refining process is performed on the FeMn ferroalloy, a mid-carbon or low-carbon FeMn ferroalloy is added to the storage.

Equipment for melting the manganese-containing nonferrous metal may be an electric furnace using arc heat or a melting furnace having an induction heating means.

In addition, when the first melt is composed of only the manganese-containing nonferrous metal without the FeMn ferroalloy, the manganese-containing nonferrous metal is melted outside the storage and is then added to the storage. In another example, when the first melt is composed of the FeMn ferroalloy and the manganese-containing nonferrous metal, the first melt may be produced by inputting the molten FeMn ferroalloy and the molten manganese-containing nonferrous metal to the storage or by inputting the molten FeMn ferroalloy to the storage and then inputting a solid-state manganese-containing nonferrous metal.

In an exemplary embodiment, the nitrogen content in the melt is raised by blowing nitrogen into the molten-state manganese-containing melt (first melt). At this point, while the melt (first melt) is received or stored in the storage having an inner space, the nitrogen content is adjusted by supplying nitrogen to the storage and blowing the nitrogen into the melt. In addition, the melt having already completely adjusted nitrogen content, that is, the second melt is mixed with the molten steel. In other words, before mixing with the molten steel, the melt having the adjusted nitrogen content is prepared, and mix the melt with the molten steel.

That is, a high-nitrogen, high-manganese molten steel is not produced, as in related arts, such that a solid-state FeMn ferroalloy, a manganese-containing nonferrous metal, and scrap iron are charged into an arc furnace, and blowing nitrogen while melting with arc heat, or such that a solid-state FeMn ferroalloy, a manganese-containing nonferrous metal, and scrap iron are charged into a vacuum melting furnace, and blowing nitrogen while pressurizing the vacuum melting furnace, but in the exemplary embodiment, the second melt is prepared by blowing nitrogen into the molten-state first melt, and the second melt is mixed with the molten steel.

Accordingly, in the exemplary embodiment, since nitrogen is not added in an operation step in which large amounts of solid materials (solid-state FeMn ferroalloy, manganese-containing nonferrous metal, and scrap iron) are melted, oxidation of manganese due to high-temperature heat may be minimized or prevented. In addition, in the exemplary embodiments, large amounts of solid materials (solid-state FeMn ferroalloy, manganese-containing nonferrous metal, and scrap iron) are not added and a small amount of manganese-containing nonferrous metal or a FeMn ferroalloy are input, if necessary, into a produced melt in a molten state, and thus, a problem of temperature drop due to the addition of the solid materials may be minimized or prevented.

The storage according to an exemplary embodiment is a means designed to have a function for heating or maintaining the temperature of a melt and to allow a gas to be blown thereinto. For example, the storage has an inner space which may receive a melt and includes a container having an open upper side, a cover for closing the upper opening, and a heating part for heating the container. Furthermore, a lance may be installed so as to pass through the cover and be partially inserted into the container, or a nozzle may be installed under the heating part. Here, nitrogen is blown through at least any one of the lance or the nozzle.

In addition, the heating part is an induction heating means and may include an induction coil installed around the container and a power supply part for applying power to the induction coil. Such the storage may be any one of a melting furnace or a temperature holding furnace which is commonly used in the steelmaking technology field.

Hereinafter, in order to produce a high-nitrogen, high-manganese steel having target contents of manganese and nitrogen, a producing method for melt and a melt mixing amount will be described in detail.

Firstly, in order to produce a high-nitrogen, high-manganese steel having a target nitrogen content, an amount of molten steel in which a melt is mixed to the first molten steel, that is, the amount (T) of second molten steel, and a required nitrogen amount (T) in the second molten steel are calculated by using the target nitrogen content of the high-nitrogen, high-manganese molten steel to be produced, that is, the second molten steel. Expressing this by an equation, the equation is as shown in Equation 1 below. Here, the amount of second molten steel may be a target amount of the second molten steel to be produced.

[Equation 1]

Required nitrogen amount of second molten steel $(T)$

$= \text{Amount of second molten steel } (T)$

$\times \dfrac{\text{Target nitrogen content of second molten steel } (wt\%) - 0.01\ (wt\%)}{100\ (wt\%)}$

In addition, by using the required nitrogen amount (T) of the second molten steel calculated by Equation 1 and the melt mixing amount (T) to be mixed with the first molten steel, a nitrogen content (wt%) required for the melt is calculated, and may be calculated by using Equation 2 below.

[Equation 2]

Required nitrogen amount in melt $(wt\%)$

$= \dfrac{\text{Required nitrogen amount of second molten steel } (T))}{\text{Melt mixing amount } (T)} \times 100\ (wt\%)$

Here, the melt mixing amount (T) is determined or calculated according to the amount of the second molten steel to be produced, the target manganese content (wt%) of the second molten steel, and the manganese content (wt%) of the produced melt. In addition, the melt mixing amount (T) varies according to the add amount (T) of manganese-containing ferroalloy further added to the molten steel when the manganese content in the produced melt is not sufficient. Here, the add amount (T) of the manganese-containing ferroalloy is favorably limited to 5-10 T. Expressing the method for calculating the melt mixing amount using the above-mentioned variable value by an equation, the equation is as shown in Equation 3 below.

[Equation 3]

Melt mixing amount $(T)$

$= \left( \text{Amount of second molten steel } (T) \right.$

$\left. \times \dfrac{\dfrac{\text{Target manganese content of second molten steel } (wt\%)}{100}}{\dfrac{\text{Manganese content in melt } (wt\%)}{100}} \right)$

$- \text{Solid manganese addition amount } (T)$

Furthermore, when the melt mixing amount calculated by Equation 3 and the required nitrogen amount of the second molten steel calculated by Equation 1 are applied to Equation 2, the required nitrogen content in the melt is calculated.

Here, the required nitrogen content (wt%) in the melt is a condition such that when the melt is mixed with the first molten steel and the second molten steel is produced, the target nitrogen content (wt%) is obtained. In an embodiment, while blowing nitrogen into the melt inside the storage, the actual nitrogen content (wt%) in the melt is allowed to reach the required nitrogen content (wt%) in the melt calculated by Equation 2.

However, even when blowing nitrogen into the melt, nitrogen is not dissolved into the melt when nitrogen is blown exceeding the nitrogen saturation solubility of the melt. Accordingly, in order to obtain a target high-concentration nitrogen content, it is necessary to raise the nitrogen saturation solubility of the melt. The nitrogen content in the melt varies according to the nitrogen solubility in the melt, and the nitrogen solubility of the melt decreases according to an increase in the carbon content in the melt. In addition, when the carbon content in the melt excessively increases, an increase in the nitrogen content in the melt to be produced is limited. Accordingly, carbon in the manganese-containing melt is adjusted below 1.5 wt%, and the carbon content may be controlled through a refining process during producing the manganese-containing melt.

In addition, in order to control each of nitrogen and manganese in the second molten steel to be produced, when the required nitrogen content in the melt is lower than 1 wt% (that is, when the calculated value using Equation 2 is less than 1 wt%), the nitrogen content in the melt may be controlled up to lower than 1 wt% by adjusting the carbon content. However, when the required nitrogen content of the melt is at least 1 wt% (that is, when the calculated value using Equation 2 is at least 1 wt%), it is difficult to control the nitrogen content in the melt to exceed 1 wt% only by adjusting the carbon content. Accordingly, in this case, a material other than carbon, that is, at least any one of Cr or Al is added to the melt and the content of at least one of Cr or Al in the melt is adjusted to raise the nitrogen solubility in the melt, and thus, the nitrogen content in the melt may be adjusted to be higher than 1 wt%.

However, in case of Al, when exceeding 1 wt%, Al is crystallized as A1N and rather decreases the nitrogen solubility and may cause a quality degradation problem due to Al during casting. Thus, in the exemplary embodiment, less than 1 wt% of Al is added.

In addition, the nitrogen solubility in the melt varies also according to the temperature of the melt. That is, in case of melts having the same composition, there is a tendency that the higher the temperature of the melt, the lower the nitrogen solubility. Accordingly, in producing a high-nitrogen, high-manganese steel, it is necessary to appropriately control the temperature of the melt.

As described above, the nitrogen solubility in the melt varies according to a carbon (C) content, a chromium (Cr) content, an aluminum (Al) content, and the temperature, and the nitrogen content in the melt varies according to the nitrogen solubility in the melt. This is expressed in Equation 4 below.

[Equation 4]

$$\text{Required nitrogen content in melt } (wt\%)$$

$$= \left(3.95 - 2.09^{10^{-3}}\right) \times \text{Melt temperature } (^\circ\text{C})$$

$$\times (0.15 \times \text{Carbon } (C) \text{ content } (wt\%) \text{ in melt}) + (0.093$$

$$\times (\text{Chromium } (Cr)\text{content } (wt\%) \text{ in melt})$$

$$+ (0.14 \times \text{Aluminum } (Al) \text{ content } (wt\%) \text{ in melt})$$

In Equation 4, the "nitrogen content (wt%) required for the melt" is the same value as the "nitrogen content (wt%) required for the melt" calculated by Equation 2. That is, when the "nitrogen content (wt%) required for the melt" is calculated by Equation 2, the calculated value is applied to the "nitrogen content (wt%) required for the melt" of Equation 4. In addition, the melt temperature (°C), the carbon (C) content (wt%) in the melt, the chromium (Cr) content (wt%) in the melt, and the aluminum (Al) content (wt%) in the melt, which are for satisfying the "nitrogen content (wt%) required for the melt" of Equation 4, are obtained.

Here, the melt temperature (°C), the chromium (Cr) content (wt%) in the melt, and the aluminum (Al) content (wt%) in the melt are adjusted when blowing nitrogen into the melt inside the storage. However, the carbon (C) content (wt%) in the melt is adjusted when producing the manganese-containing melt. That is, when the carbon (C) content (wt%) in the melt for satisfying the "nitrogen content (wt%) required for the melt" is obtained by Equation 4, the manganese-containing melt is produced so as to reach the obtained "carbon content (wt%) required for the melt" through a refining operation. In addition, at least one among the melt temperature (°C), the chromium (Cr) content (wt%) in the melt, and the aluminum (Al) content (wt%) in the melt is adjusted when blowing nitrogen into the melt.

The melt temperature (°C) may be adjusted to the melt temperature obtained by adjusting the heating part of the storage. Furthermore, when the nitrogen content (wt%) in the melt calculated by Equation 2 is higher than 1 wt%, at least one of the chromium (Cr) content (wt%) in the melt or the aluminum (Al) content (wt%) in the melt is adjusted to the obtained content. To this end, the melt is adjusted to satisfy the calculated nitrogen content in the melt by adding an alloy material including FeCr and Al to the melt.

However, even when the required nitrogen content of the melt is not higher than 1 wt%, there is no problem in adjusting at least one of the chromium (Cr) content (wt%) in the melt or the aluminum (Al) content (wt%) in the melt. In this case, the nitrogen content in the melt may more easily be controlled than lowering the melt temperature up to around the melting point in order to adjust the nitrogen in the melt, or than lowering the carbon content to be very lower.

When the melt having the target contents of manganese and nitrogen is prepared in the storage through the above-mentioned method, the melt is mixed with the first molten steel (S300), and thus, a high-nitrogen, high-manganese steel, that is, the second molten steel is produced. At this point, the melt mixing amount to be mixed with the first molten steel is adjusted to be the melt mixing amount calculated through Equation 3 mentioned above.

Next, the nitrogen content in the produced second molten steel is measured, and whether the measured nitrogen content satisfies the target nitrogen content is determined (S400). At this point, when the measured nitrogen content satisfies the target nitrogen content, casting is performed (S600).

However, when the measured nitrogen content does not satisfy the target nitrogen content, a refining for adjusting the nitrogen content is performed (S500). That is, when the nitrogen content in the second molten steel is lower than the target nitrogen content, the nitrogen content is adjusted to the target nitrogen content by adding a nitrogen-containing alloy, such as manganese nitride. Conversely, when the nitrogen content in the second molten steel is higher than the target nitrogen content, degassing is performed by using a Reinstahl Huten Werke Heraus (RH) or a vacuum tank degasser (VTD) so as to lower the nitrogen content.

Then, whether the re-measured refined content after such refining satisfies the target nitrogen content is determined, and casting is performed or the refining is performed again.

As such, in accordance with exemplary embodiments, since nitrogen is not added in an operation step in which large amounts of solid materials (solid-state FeMn ferroalloy, manganese-containing nonferrous metal, and scrap iron) are melted, oxidation of manganese due to high-temperature heat may be minimized or prevented. In addition, in the exemplary embodiments, large amounts of solid materials (solid-state FeMn ferroalloy, manganese-containing nonferrous metal, and scrap iron) are not added and a small amount of manganese-containing nonferrous metal or a FeMn ferroalloy are added, if necessary, into a produced melt in a molten state, and thus, a problem of temperature drop due to the addition of the solid materials may be minimized or prevented.

INDUSTRIAL APPLICABILITY

In accordance with exemplary embodiments, oxidation of manganese due to high-temperature heat may be minimized or prevented. In addition, in the exemplary embodiments, a large amount of solid material is not added, and a small amount of manganese-containing nonferrous metal or a FeMn ferroalloy is added, if necessary, into a melt prepared in a molten state, and thus, a problem of temperature drop due to the addition of the solid material may be minimized or prevented.

Claims

1. A method for producing steel, the method comprising:

    preparing a first molten steel and a manganese-containing melt;
    supplying a nitrogen gas into a storage to blow nitrogen into the melt received in the storage and thereby adjusting a nitrogen content (wt%) in the melt to a required nitrogen content (wt%); and
    mixing the melt and the first molten steel to produce a second molten steel containing manganese and nitrogen.

2. The method of claim 1, wherein the adjusting the nitrogen content (wt%) in the melt to the required nitrogen content (wt%) comprises:

calculating a required nitrogen content (T) required for the second molten steel by using a second molten steel amount (T) which is a target producing amount of the second molten steel, and a target nitrogen content (wt%) of the second molten steel to be mixed;
calculating the required nitrogen content (wt%) required for the melt in order to produce the second molten steel by using the required nitrogen amount (T) required for the second molten steel and a mixing amount (T) of the melt;
deriving at least one among a melt temperature, a carbon (C) content (wt%) in the melt, a chromium (Cr) content (wt%) in the melt, or an aluminum (Al) content (wt%) in the melt in order to satisfy the calculated required nitrogen content (wt%); and
adjusting the melt so as to satisfy the derived melt temperature while blowing nitrogen into the melt inside the storage, and adjusting at least one of the chromium (Cr) content (wt%) in the melt or the aluminum (Al) content (wt%) in the melt so as to satisfy the derived chromium (Cr) content (wt%) in the melt and the derived aluminum (Al) content (wt%) in the melt.

3. The method of claim 2, wherein in the calculating the required nitrogen amount required for the second molten steel, Equation 1 is used,

[Equation 1]

$$\text{Required nitrogen amount of second molten steel } (T)$$
$$= \text{Amount of second molten steel } (T)$$
$$\times \frac{\text{Target nitrogen content of second molten steel } (wt\%) - 0.01 \ (wt\%)}{100 \ (wt\%)}$$

and in calculating the nitrogen content (wt%) required for the melt, Equation 2 is used.

[Equation 2]

$$\text{Required nitrogen amount in melt } (wt\%)$$
$$= \frac{\text{Required nitrogen amount of second molten steel } (T))}{\text{Melt mixing amount } (T)} \times 100 \ (wt\%)$$

4. The method of claim 3, comprising calculating the mixing amount (T) of the melt by using a mixing amount (T) of the first molten steel, a target manganese content (wt%) in the second molten steel, and a manganese content (wt%) in the melt.

5. The method of claim 4, wherein in calculating the mixing amount (T) of the melt, Equation 3 is used.

[Equation 3]

Melt mixing amount $(T)$

$$= \left( \text{Amount of second molten steel } (T) \right.$$

$$\times \frac{\dfrac{\text{Target manganese content of second molten steel } (wt\%)}{100}}{\dfrac{\text{Manganese content in melt } (wt\%)}{100}} \left. \right)$$

$$- \text{ Solid manganese add amount } (T)$$

6. The method of claim 4, wherein in the deriving at least one among a melt temperature, a carbon (C) content (wt%) in the melt, a chromium (Cr) content (wt%) in the melt, or an aluminum (Al) content (wt%) in the melt, Equation 4 is used.

[Equation 4]

Required nitrogen content in melt $(wt\%)$

$$= \left( 3.95 - 2.09^{10^{-3}} \right) \times \text{Melt temperature } (^{\circ}\text{C})$$

$$\times (0.15 \times \text{Carbon } (C) \text{ content } (wt\%) \text{ in melt}) + (0.093$$

$$\times (\text{Chromium } (Cr) \text{content } (wt\%) \text{ in melt})$$

$$+ (0.14 \times \text{Aluminum } (Al) \text{ content } (wt\%) \text{ in melt})$$

7. The method of claim 6, wherein
   in the adjusting of the melt temperature and the carbon (C) content (wt%) so as to satisfy the derived temperature of the manganese-containing melt and the derived carbon (C) content (wt%), and in adjusting of the chromium (Cr) content (wt%) in the melt or the aluminum (Al) content (wt%) in the melt so as to satisfy at least one of the derived chromium (Cr) content (wt%) and the derived aluminum (Al) content (wt%),
   the temperature of the manganese-containing melt is adjusted to the manganese-containing melt temperature derived by raising or maintaining the melt temperature inside the storage while blowing nitrogen into the storage; and when the carbon (C) content (wt%) is derived in order to satisfy the required nitrogen content (wt%) required for the melt, in the preparing of the manganese-containing melt, the melt is adjusted so as to satisfy the derived carbon (C) content (wt%), and
   each content (wt%) of the chromium (Cr) content (wt%) and the aluminum (Al) content (wt%) in the melt is adjusted by inputting a chromium (Cr)-containing material and a aluminum (Al)-containing material into the storage.

8. The method of claim 7, wherein
   when the calculated nitrogen content required for the melt is less than 1 wt%, at least one of the melt temperature and the carbon (C) content (wt%) in the melt is adjusted, and
   when the calculated nitrogen content required for the melt is no less than 1 wt%, at least one of the chromium (Cr) content (wt%) in the melt and the aluminum (Al) content (wt%) in the melt is adjusted.

9. The method of any one of claims 5 to 8, wherein in the mixing of the nitrogen-blown melt and the first molten steel, the melt having the nitrogen content adjusted to the required nitrogen content (wt%) in the storage is mixed with the first molten steel in the mixing amount (T) of the melt calculated by Equation 3.

10. The method of claim 9, comprising:

measuring the nitrogen content (wt%) of the second molten steel produced by mixing the melt and the first molten steel;

comparing the measured nitrogen content (wt%) of the second molten steel with the target nitrogen content (wt%);

starting casting using the second molten steel when the measured nitrogen content (wt%) of the second molten steel satisfies the target nitrogen content (wt%); and

further adjusting the nitrogen content (wt%) when the measured nitrogen content (wt%) of the second molten steel does not satisfy the target nitrogen content (wt%).

**11.** The method of claim 9, wherein the further adjusting of the nitrogen content (wt%) comprises:

inputting an nitrogen-containing alloy when the measured nitrogen content (wt%) of the second molten steel is lower than the target nitrogen content (wt%) is performed; and

degassing of the second molten steel is performed when the measured nitrogen content (wt%) of the second molten steel is higher than the target nitrogen content (wt%).

【Fig. 1 】

【Fig.2】

S210

S211 — MELT FeMn FERROALLOY

S212 — MANGANESE-CONTAINING NONFERROUS METAL

S213 — REFINING

STORAGE

【Fig.3】

## INTERNATIONAL SEARCH REPORT

| | International application No. |
|---|---|
| | **PCT/KR2017/009664** |

**A. CLASSIFICATION OF SUBJECT MATTER**

*C21C 7/072(2006.01)i, C21C 7/00(2006.01)i, C22C 38/00(2006.01)i*

According to International Patent Classification (IPC) or to both national classification and IPC

**B. FIELDS SEARCHED**

Minimum documentation searched (classification system followed by classification symbols)
C21C 7/072; C21B 5/00; C21C 5/52; C21C 7/10; C21C 7/00; C21C 7/04; C22C 38/00

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: molten steel, molten metal, manganese, ferromanganese, nitrogen, blowing, pouring

**C. DOCUMENTS CONSIDERED TO BE RELEVANT**

| Category* | Citation of document, with indication, where appropriate, of the relevant passages | Relevant to claim No. |
|---|---|---|
| X | KR 10-2014-0090713 A (POSCO) 18 July 2014 | 1 |
| | See paragraphs [0034]-[0038] and claims 1-3. | |
| A | | 2-11 |
| A | JP 2005-350718 A (JFE STEEL K.K.) 22 December 2005 | 1-11 |
| | See paragraphs [0019]-[0023] and claim 1. | |
| A | JP 2007-119894 A (JFE STEEL K.K.) 17 May 2007 | 1-11 |
| | See paragraphs [0006]-[0010] and claim 1. | |
| A | US 2011-0000339 A1 (ROSE et al.) 06 January 2011 | 1-11 |
| | See paragraphs [0025], [0026] and claim 1. | |
| A | KR 10-1104799 B1 (POSCO) 12 January 2012 | 1-11 |
| | See paragraph [0042] and claims 1, 2. | |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 DECEMBER 2017 (04.12.2017) | **05 DECEMBER 2017 (05.12.2017)** |

| Name and mailing address of the ISA/KR | Authorized officer |
|---|---|
| Korean Intellectual Property Office Government Complex-Daejeon, 189 Seonsa-ro, Daejeon 302-701, Republic of Korea | |
| Facsimile No.  +82-42-481-8578 | Telephone No. |

Form PCT/ISA/210 (second sheet) (January 2015)

**INTERNATIONAL SEARCH REPORT**
Information on patent family members

International application No.

**PCT/KR2017/009664**

| Patent document cited in search report | Publication date | Patent family member | Publication date |
|---|---|---|---|
| KR 10-2014-0090713 A | 18/07/2014 | KR 10-1424644 B1 | 04/08/2014 |
| JP 2005-350718 A | 22/12/2005 | JP 04277741 B2 | 10/06/2009 |
| JP 2007-119894 A | 17/05/2007 | JP 04844087 B2 | 21/12/2011 |
| US 2011-0000339 A1 | 06/01/2011 | AT 437973 T | 15/08/2009 |
| | | CA 2576444 A1 | 02/06/2007 |
| | | CA 2576444 C | 06/03/2012 |
| | | CA 2733474 A1 | 02/06/2007 |
| | | CA 2733474 C | 13/08/2013 |
| | | CN 100519806 C | 29/07/2009 |
| | | CN 101057001 A | 17/10/2007 |
| | | EP 1954845 A1 | 13/08/2008 |
| | | EP 1954845 B1 | 29/07/2009 |
| | | ES 2328164 T3 | 10/11/2009 |
| | | JP 05037360 B2 | 26/09/2012 |
| | | JP 2008-531840 A | 14/08/2008 |
| | | KR 10-1113717 B1 | 27/02/2012 |
| | | KR 10-2008-0072786 A | 07/08/2008 |
| | | UA 82962 C2 | 26/05/2008 |
| | | US 2009-0114062 A1 | 07/05/2009 |
| | | US 7998243 B2 | 16/08/2011 |
| | | WO 2007-062680 A1 | 07/06/2007 |
| KR 10-1104799 B1 | 12/01/2012 | KR 10-2006-0028933 A | 04/04/2006 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1193718
- KR 1450177
- KR 101450177
- KR 101193718